# EUROPEAN PATENT APPLICATION

(11) **EP 4 715 195 A1**
(43) Date of publication of application: **25.03.2026**
(21) Application number: 25194591.1
(22) Date of filing: 07.08.2025
(51) Int. Cl.: F03D 1/06, F03D 17/00

(54) **A WIND TURBINE**

(30) Priority: 23.08.2024 DK PA202430482
(71) Applicant: VESTAS WIND SYSTEMS A/S, 8200 Aarhus N (DK)
(72) Inventor: SMITH, James, Newport, Isle of Wight (GB); MARKS, Drake Lewis, Newport, Isle of Wight (GB); TILLMAN, Alistair, Newport, Isle of Wight (GB)
(74) Representative: Vestas Patents Department

(57) **Abstract**

In a first aspect of the present invention there is provided a wind turbine comprising a hub assembly, a blade part attached to the hub assembly, and a displacement sensor array comprising a plurality of displacement sensors. Each displacement sensor is attached to one of the blade part or the hub assembly. Each displacement sensor comprises a physical contact probe which is slidable along a probe axis in a probe direction. The physical contact probe of each displacement sensor physically contacts the other of the blade part or the hub assembly such that the displacement sensor is arranged to detect relative movement between the blade part and the hub assembly in the probe direction.

## Description

### Technical field

The present invention relates generally to wind turbines and more particularly to a wind turbine comprising a hub assembly, a blade part, and a displacement sensor array.

### Background

Wind turbines typically comprise a rotor having a plurality of wind turbine blades attached to a central hub. The blades may be attached to the hub in different ways, however, in modern megawatt wind turbines the blades are typically attached to the hub using mechanical fasteners, such as bolts. In some examples, mechanical fastening components may be integrated in a composite shell of a wind turbine blade.

It is important to inspect wind turbines regularly to ensure safe and efficient use of the turbine. In some cases it may be advantageous to monitor aspects of the wind turbine on an ongoing basis. However, inspecting and/or monitoring the attachment of a blade to the hub, for example by inspecting and/or monitoring the mechanical fasteners attaching a blade to a hub, can be challenging once the blade is in use and attached to an operational turbine. Inspection of fasteners integrated in a composite shell without damaging the composite shell, and thereby compromising the strength of the shell, is even more challenging.

It is against this background that the present invention has been developed.

### Summary

In a first aspect of the present invention there is provided a wind turbine comprising a hub assembly, a blade part attached to the hub assembly, and a displacement sensor array comprising a plurality of displacement sensors. Each displacement sensor is attached to one of the blade part or the hub assembly. Each displacement sensor comprises a physical contact probe which is slidable along a probe axis in a probe direction. The physical contact probe of each displacement sensor physically contacts the other of the blade part or the hub assembly such that the displacement sensor is arranged to detect relative movement between the blade part and the hub assembly in the probe direction.

The displacement sensor array provides a simple and accurate means for detecting relative movement between the blade part and the hub assembly. Relative movement between the blade part and the hub assembly may be the result of loose fasteners attaching the blade part to the hub assembly or loose inserts in the blade part which are also configured for attaching the blade part to the hub assembly. As described later in more detail, signals from the displacement sensors indicating the detection of relative movement between the blade part and the hub assembly can be analysed to monitor relative movement between the blade part and hub assembly in use. For example, the wind turbine and displacement sensor array may be part of a wind farm monitoring and control system configured to perform turbine operations, such as halting the turbine, dependent on signals output from the displacement sensors.

Relative movement between the blade part and the hub assembly may be detected by a respective displacement sensor detecting a variation in displacement of the physical contact probe. Such variation in the displacement of the physical contact probe, may be indicative of a variation in the position of the blade part relative to the hub assembly.

In some preferred examples, the physical contact probe of each displacement sensor may be biased in the probe direction to contact, i.e. engage, the respective blade part or hub assembly.

In some examples, the blade part may extend longitudinally in a spanwise direction. The respective probe direction of each displacement sensor may be substantially parallel to the spanwise direction of the blade part. In some preferred examples, each displacement sensor in the array may be arranged to measure relative movement between the blade part and the hub assembly in the spanwise direction of the blade part.

In some examples, the plurality of displacement sensors may comprise a plurality of microswitch sensors. Microswitch displacement sensors may be a particularly cost-effective means for detecting relative movement between the blade part and the hub assembly. The displacement sensor array may comprise a relative high number of microswitch sensors, such as more than 10, in some examples more than 20, or in some examples more than 30 microswitch displacement sensors. This may facilitate rapid detection and accurate identification of relative movement between the blade part and the hub assembly.

Further, microswitch displacement sensors provide a binary output signal and react very quickly to output such a signal when a predetermined relative displacement threshold, i.e. limit, is exceeded. As explained in more detail later, such microswitch displacement sensors may therefore be particularly advantageous for use in a wind farm monitoring and control system configured to halt operation of the turbine.

In some examples, the plurality of displacement sensors may comprise a plurality of linear variable differential transformer (LVDT) sensors. LVDT sensors may prove a continuous output signal such that the displacement sensor array can be used for monitoring the relative movement between the blade part and the hub assembly. Such a displacement sensor array may be used for analysing relative movement over a time period, or during operation of the wind turbine. LVDT displacement sensors may also be used in a wind farm monitoring and control system to provide an output signal when a predetermined relative displacement threshold is exceeded. In some examples, the LVDT displacement sensors may be reconfigurable to adjust the displacement threshold, i.e. limit, at which the signal is output.

Alternatively, in some other examples the plurality of displacement sensors may comprise a variable resistor, differential transformer, load sensor, torque transducer, linear encoder or rotary encoder. In some other examples the plurality of displacement sensors may comprise electromagnetic field (EMF) fluctuation sensors such as eddy current sensors, capacitive sensors, or inductive sensors. In some examples the plurality of displacement sensors may comprise optical sensors such as laser sensors, infra-red (IR) sensors, or ultrasonic sensors. In some other examples the plurality of displacement sensors may comprise a load cell such as an axial compression load cell, a bending load cell, or a torsional load cell. In some other examples the plurality of displacement sensors may comprise a pressure pad, a draw wire sensor (potentiometer) or an inclinometer.

In some other examples the blade part may be a blade root extender configured for attachment between the blade part and the hub assembly. Each displacement sensor may be attached to one of the blade root extender or the hub assembly, and the physical contact probe of each displacement sensor may physically contact the other of the blade root extender or the hub assembly to detect relative movement between the blade root extender and the hub assembly.

In some examples, the blade part may comprise a composite shell and a plurality of inserts embedded in the composite shell. The inserts may be configured for attaching the blade part to the hub assembly. The plurality of inserts may be located in a root portion of a wind turbine blade. For example, an inboard end of the blade part may define at least part of the root portion of a wind turbine blade.

The inserts may be metallic bushings with an internal thread. The bushings may receive a fastener, such as a stud bolt, for attaching the blade part to the hub assembly.

The blade part may be attached to the hub assembly via the inserts such that the blade part is cantilevered relative to the hub assembly. A moment of the mass of the blade part may cause tensile and compressive loading of the composite shell. Such loading may cause relative movement between the blade part and the hub assembly in the probe direction which can be detected by the displacement sensors in the displacement sensor array.

In some examples, the blade part may be a blade shell of a wind turbine blade. For example, the composite shell of the blade part may form substantially the entire blade shell of a wind turbine blade. An inboard end of the blade part may define a root end of the blade configured for attaching the blade part to the hub assembly. An outboard end of the blade part may define a tip end of the blade.

In some examples, the blade part may be a blade module of a modular wind turbine blade. The blade part may be configured for connection to another blade module to form the modular wind turbine blade. The inboard end of the blade part may define the root end of the blade configured for attaching the blade part to the hub assembly, and the outboard end of the blade part may define a connection end configured for connecting the blade part to an outboard blade module.

Composite materials, such as glass fibre reinforced plastic (GFRP), can provide relative high load bearing capacity at a relative low component mass, whilst also facilitating strict control of load paths and mass distribution. Accordingly, the shell of the wind turbine blade part may be an advantageous application for composite materials. However, composite materials such as GFRP can be relatively brittle and concentrated loads can be detrimental to the longevity of a composite component. It follows that whilst composite materials may be advantageous for forming the shell of the blade part, such materials also present challenges for attaching the blade part to other wind turbine components, such as the hub assembly. The plurality of inserts are configured specifically for attaching the blade part to the hub assembly. Accordingly, the inclusion of a plurality of inserts in the composite shell provides a simple and robust means for attaching the blade part to the hub assembly.

In some preferred examples the inserts may be formed of a different material compared to the composite shell of the blade part. For example, the inserts may be formed of a material, such as steel, having a higher strength and stiffness than the composite shell in which they are embedded. Such materials also facilitate the use of a threaded fastener for attaching the blade part to the hub assembly.

The plurality of inserts embedded in the composite shell may be integrated with the composite material of the shell during manufacture of the blade part. As such, the inserts may be referred to as "integrated inserts", i.e. integrated in the composite shell.

In some examples, each insert embedded in the composite shell may be oriented to extend longitudinally in the spanwise direction of the blade part.

In some examples, the blade part may define a root portion of a wind turbine blade. The inserts may be distributed circumferentially around the root portion. Distributing the inserts around the root portion may help to spread the loads transferred between the blade part and the hub assembly, in use. Accordingly, peak loads experienced by each insert and the respective portion of the composite shell surrounding said insert may be reduced, thereby increasing the longevity of the blade part.

In some examples, the plurality of displacement sensors may be attached to the blade part and distributed circumferentially around the root portion. Distributing the displacement sensors around the root portion may help to facilitate accurate identification of any instances of relative movement between the blade part and the hub assembly. Assessment of signals output from the displacement sensor array may provide an accurate indication of the portion of the blade part experiencing movement relative to the hub assembly. Such an assessment may therefore be helpful for identifying loose inserts and/or fasteners attaching the blade part to the hub assembly.

In some examples, each displacement sensor may be attached to the blade part and aligned with an insert embedded in the composite shell of the blade part. Such an arrangement may be particularly advantageous for detecting any relative movement between the blade part and the hub assembly resulting from the inserts, such as loose or disbonded inserts in the composite shell. In particular, such an arrangement may help to accurately pinpoint the or each specific insert responsible for the relative movement. In some preferred examples the displacement sensor array may comprise at least one displacement sensor for each insert in the blade part.

In some examples, each displacement sensor may be attached to the blade part and the physical contact probe of each displacement sensor may physically contact the hub assembly. In some examples the blade part may offer a greater surface area than the hub assembly for attaching the plurality of displacement sensors in the array. Such a configuration may therefore be advantageous for assembling the displacement sensor array in the wind turbine.

In some other examples, the blade part may be attached to a pitch bearing of the hub assembly, and the physical contact probe of each displacement sensor may physically contact the pitch bearing. The blade part attached to the pitch bearing may be rotatable, for example rotatable about its longitudinal axis, relative to a hub main body. For example, the pitch bearing may comprise an inner bearing ring (i.e. inner bearing race) and an outer bearing ring (i.e. outer bearing race), where the inner and outer bearing rings are configured to rotate relative to one another. The blade part may be attached to one of the inner or outer bearing rings. In such examples, the physical contact probe of each displacement sensor may preferably physically contact the bearing ring to which the blade part is attached. Each displacement sensor may preferably be arranged to detect relative movement between the blade part and the respective bearing ring to which the blade part is attached.

In some examples, the blade part may be attached to a stiffening plate of the hub assembly. The physical contact probe of each displacement sensor may physically contact the stiffening plate. In some examples the stiffening plate may also be referred to as a bearing plate. For example, the stiffening plate may reinforce the pitch bearing. In some examples, the stiffening plate may provide a particularly advantageous surface for the respective physical contact probes to contact.

In some other examples, the blade part may be attached to the hub main body of the hub assembly. In such an example the blade part may not be rotatable relative to the hub main body. In such an example, the physical contact probe of each displacement sensor may preferably physically contact the hub main body.

In some other examples, the blade part may be attached to a hub extender of the hub assembly. In such an example, the physical contact probe of each displacement sensor may preferably physically contact the hub extender.

In some examples, the blade part may define a root portion of a wind turbine blade. In such an example, the displacement sensor array may comprise at least one displacement sensor positioned at each of a leading edge and an opposing trailing edge of the root portion. Further, the displacement sensor array may comprise at least one displacement sensor positioned on each of a windward side and a leeward side of the root portion. In some preferred examples, the displacement sensor array may comprise at least one displacement sensor positioned on the windward side of the root portion centrally between the leading edge and the trailing edge. Further, in some examples the displacement sensor array may comprise at least one displacement sensor positioned on the leeward side of the root portion centrally between the leading edge and the trailing edge.

These regions of the root portion may be expected to experience the highest loads, in use. Accordingly, it may be expected that any relative movement between the blade part and the hub assembly would be most likely to occur in, or proximal to, these regions. Arranging at least one displacement sensor of the array in each of these regions therefore improves the likelihood of detecting relative movement in the event that such movement may occur.

In some preferred examples, the displacement sensor array may additionally comprise at least one displacement sensor positioned on the windward side of the root portion between the trailing edge and a central position between the leading edge and the trailing edge.

In some examples, the displacement sensor array may comprise a plurality of outer displacement sensors attached to an outer surface of the blade part and a plurality of inner displacement sensors attached to an inner surface of the blade part. In use, the blade part attached to the hub assembly may experience both tensile and compressive loading. In particular, the outer surface may experience tensile loading whilst the inner surface experiences compressive loading, and similarly the outer surface may experience compressive loading whilst the inner surface experiences tensile loading. Due to the different loading conditions of the inner and outer surfaces of the blade part, relative movement between the blade part and the hub assembly may be more easily detected at either one of the inner surface or the outer surface in different situations. Positioning a plurality of displacement sensors on each of the inner surface and the outer surface of the blade part may therefore increase the likelihood of detecting relative movement in the event that such movement may occur. In examples where the displacement array comprises both inner and outer displacement sensors, such displacement sensors may be LVDT sensors in some preferred examples.

In some examples, each inner displacement sensor may be aligned with a corresponding outer displacement sensor. For example, the blade part may comprise a composite shell, and each inner displacement sensor may be separated for the corresponding outer displacement sensor by the composite shell. A pair of displacement sensors may be arranged back-to-back and separated by a portion of the composite shell. Such an arrangement facilitates an accurate analysis of the movement of each respective portion of the blade part relative to the hub assembly. Further, the inner and outer surfaces of the portion of the composite shell may experience different loading dependent on the integrity of the composite shell, one or more inserts embedded in the composite shell, and the bond between the inserts and the composite shell. Aligning an inner displacement sensor with a corresponding outer displacement sensor may facilitate improved monitoring and/or inspection of the wind turbine blade.

In some examples, the plurality of displacement sensors may be connected together in series to form a daisy chained sensor array. For example, each displacement sensor may be connected to at least one adjacent displacement sensor in the array. Connecting the displacement sensors together in series may be particularly cost effective and may reduce the overall length and complexity of wiring required for connecting the sensors. A daisy chained sensor array may therefore provide a simple arrangement facilitating fast and simple installation of the sensor array in the wind turbine.

In examples comprising a plurality of inner displacement sensors and a plurality of outer displacement sensors, each of the inner displacement sensors may be connected together in series and each of the outer displacement sensors may be connected together in series.

In some examples, the displacement sensor array may be temporarily attached to the blade part or hub assembly, for example during a service or monitoring procedure. The displacement sensors may be configured to be removed from the blade part or hub assembly for normal operation of the wind turbine.

Alternatively, the displacement sensor array may be configured to remain in the wind turbine during normal use. Such a configuration may facilitate continuous monitoring of the wind turbine in use. The wind turbine and displacement sensor array may be part of a wind farm monitoring and control system.

In another aspect of the present invention there is provided a wind farm monitoring and control system comprising a system controller and a wind turbine. The wind turbine may be the wind turbine of any of the previously described examples, and may further comprise a wind turbine controller. The system controller may be communicably coupled to the displacement sensor array to receive output signals from the plurality of displacement sensors indicative of detected relative movement between the blade part and the hub assembly. The system controller may be communicably coupled to the wind turbine controller and configured to instruct the wind turbine controller to perform a turbine operation dependent on the output signals received from the displacement sensors.

As used herein, the term "communicably coupled" may refer to any example of facilitating communication between the respective controller and displacement sensors. For example, communicably coupled may refer to physical wired connections or to wireless communication, such as WiFi communication.

In some examples, the system controller may be configured to instruct the wind turbine controller to perform a turbine operation when the output signals received from the displacement sensors indicate a variation in relative displacement between the blade part and hub assembly which exceeds a predetermined relative displacement threshold. In some examples, the predetermined displacement threshold may be 1 mm, or preferably 0.5 mm. The system controller may be configured to instruct the wind turbine controller to perform a turbine operation when the output signals received from the displacement sensors indicate a variation of 1 mm, or preferably 0.5 mm, in the relative displacement between the blade part and hub assembly.

In some examples the wind turbine may comprise a plurality of different displacement sensor arrays. In such an example, each array may respectively comprise displacement sensors having different predetermined relative displacement thresholds. For example, displacement sensors in a first array may have a first relative displacement threshold, displacement sensors in a second array may have a second relative displacement threshold that is different to the first threshold, and displacement sensors in a third array may have a third relative displacement threshold which is different to the first and second thresholds. Such a configuration may provide multiple tolerance levels for detecting relative displacements of different magnitudes.

In some examples, the turbine operation may comprise pitching a wind turbine blade, i.e. varying an angle of attack of the blade, reducing the speed and/or power of the wind turbine, or changing a yaw angle of the turbine. In some other examples the turbine operation may comprise halting operation of the turbine. For example, halting operation of the turbine may comprise one or more of activating a rotor brake, feathering the wind turbine blade.

### Brief description of the drawings

Examples of the present invention will now be described by way of non-limiting example only, with reference to the accompanying figures, in which:
Figure 1 is a schematic view of a wind turbine comprising a hub assembly and a blade part;
Figure 2 is a schematic perspective view of the blade part;
Figure 3 is a schematic cross-sectional view of a displacement sensor attached to the blade part;
Figure 4 is a schematic end view of the blade part showing a plurality of displacement sensors attached to the blade part;
Figure 5 is a schematic cross-sectional view an example comprising displacement sensors attached to both inner and outer surfaces of the blade part;
Figure 6 is a schematic diagram of a wind farm monitoring and control system; and
Figure 7 illustrates a process for controlling a wind turbine based on output signals from the displacement sensors.

### Detailed description

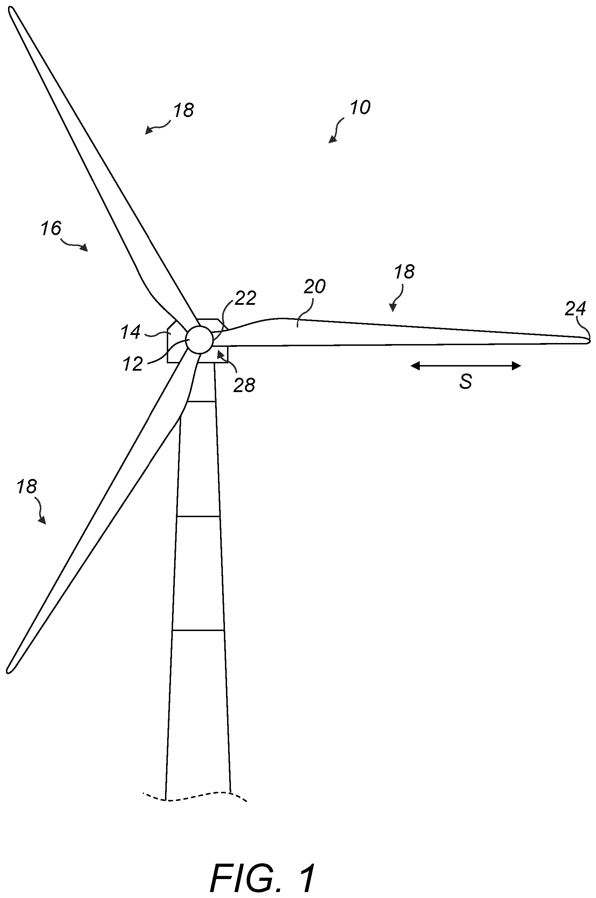

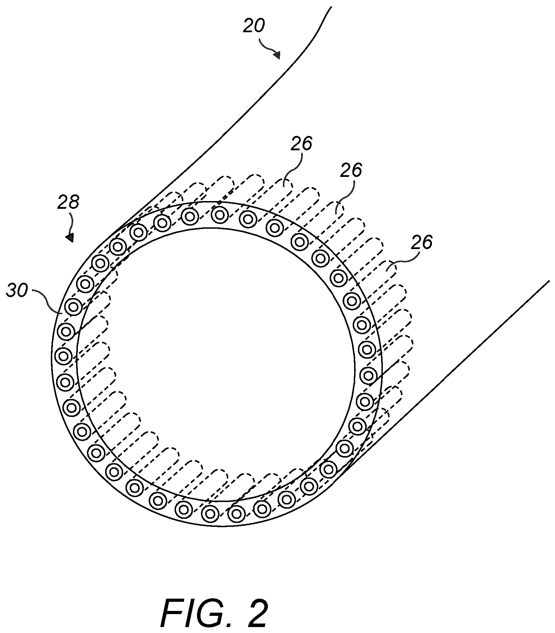

Figure 1 shows a schematic view of a wind turbine 10. The wind turbine 10 comprises a hub assembly 12, which may be rotatably coupled to a nacelle 14. For example, the hub assembly 12 may form part of a rotor 16 of the wind turbine 10, and the rotor 16 may include a plurality of wind turbine blades 18 attached to the hub assembly 12. The wind turbine 10 includes a blade part 20. As shown in the example of Figure 1, the blade part 20 may be a blade shell of a wind turbine blade 18. The blade part 20 extends longitudinally in a spanwise direction (S), for example from an inboard end 22 of the blade part 20 to an outboard end 24 of the blade part 20. The blade part 20 is attached to the hub assembly 12. For example, as shown in more detail in Figure 2, the blade part 20 may comprise a plurality of inserts 26 configured for attaching the blade part 20 to the hub assembly 12.

With reference now to Figure 2, in some examples the blade part 20 may define a root portion 28 of the wind turbine blade 18. The blade part 20 may comprise a composite shell 30 and the plurality of inserts 26 may be embedded in the composite shell 30. For example, the inserts 26 may be integrated in the composite shell 30 during manufacture of the shell, which may be made in a moulding process such as vacuum assisted resin transfer moulding (VARTM). As shown in Figure 2, the inserts 26 may be distributed circumferentially around the root portion 28. This may help to distribute and transfer loads experienced by the blade part 20 to the hub assembly 12 in use.

As described by way of background, inspecting and/or monitoring a wind turbine 10 is important to ensure continued safe and efficient use of the turbine 10. In particular, it is advantageous to inspect and/or monitor the attachment of the blade part 20 to the hub assembly 12. Inspecting fastenings such as inserts 26 integrated in the composite shell 30 may be challenging, particularly once the blade part 20 is in use and attached to the hub assembly 12 of the wind turbine 10. The wind turbine 10 may be configured to facilitate inspection and/or monitoring of the attachment of the blade part 20 without necessarily requiring direct inspection and assessment of fastenings, such as the inserts 26.

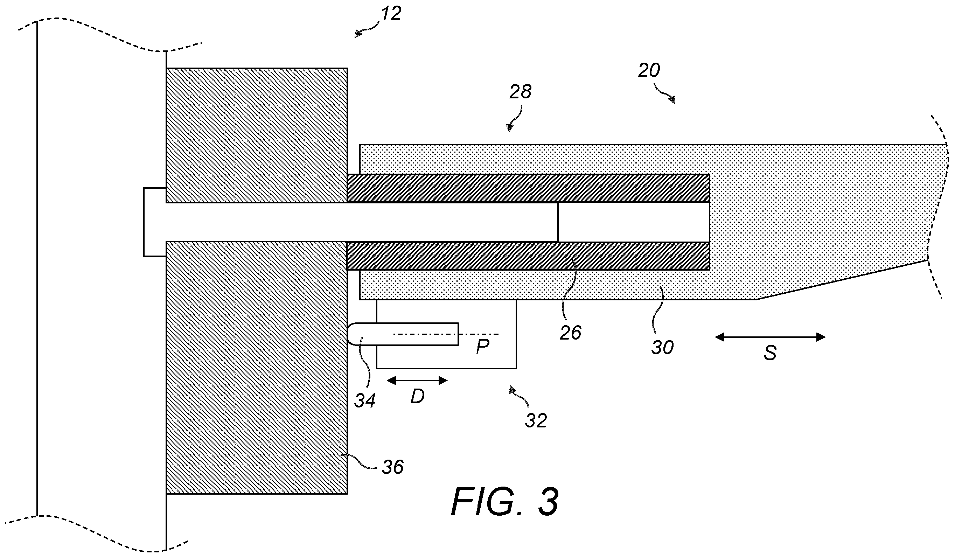

For example, with reference to each of Figures 3 to 5, the wind turbine 10 comprises a displacement sensor array comprising a plurality of displacement sensors 32. The displacement sensors 32 are preferably configured to detect and/or measure variations in the position of the blade part 20 relative to the hub assembly 12. The displacement sensor array may include a plurality of microswitch sensors 32, or, in some preferred examples, displacement sensor array may include a plurality of linear variable differential transformer (LVDT) sensors 32. Each displacement sensor 32 is attached to one of the blade part 20 or the hub assembly 12. With reference to Figure 3 for example, this example includes displacement sensors 32 attached to the blade part 20.

As shown most clearly in Figure 3, each displacement sensor 32 includes a physical contact probe 34 which is slidable along a probe axis P in a probe direction (D). For example, the respective probe direction (D) of each displacement sensor 32 may be substantially parallel to the spanwise direction (S) of the blade part 20. The physical contact probe 34 of each displacement sensor 32 physically contacts the other of the blade part 20 or the hub assembly 12 to which it is not attached. The displacement sensor 32 is arranged to detect relative movement between the blade part 20 and the hub assembly 12 in the probe direction (D).

With reference still primarily to the example shown in Figure 3, in examples where each displacement sensor 32 is attached to the blade part 20, the physical contact probe 34 of each displacement sensor 32 physically contacts the hub assembly 12. In the example of Figure 3, the blade part 20 is attached to a pitch bearing 36 of the hub assembly 12, and the physical contact probe 34 of each displacement sensor 32 may therefore physically contact the pitch bearing 36. Whilst not shown in the accompanying drawings, in some examples the hub assembly may comprise a stiffening plate (not shown) , and the physical contact probe 34 of each displacement sensor 32 may therefore physically contact the stiffening plate.

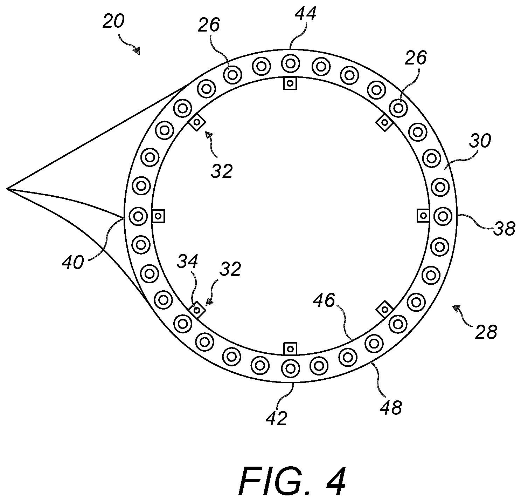

With reference still to Figure 3, but with additional reference to the end view of the blade part in Figure 4, in examples where the blade part 20 comprises a plurality of inserts 26 embedded in the composite shell 30, each displacement sensor 32 may be attached to the blade part 20 and aligned with an insert 26. This may be particularly beneficial for detecting movement of the blade part 20 relative to the hub assembly 12 resulting from loose or disbonded inserts 26.

For example, with reference to the end view in Figure 4 the plurality of displacement sensors 32 may be attached to the blade part 20 and distributed circumferentially around the root portion 28. For example, the displacement sensor array may include at least one displacement sensor 32 positioned at each of a leading edge 38 and an opposing trailing edge 40 of the root portion 28, and at least one displacement sensor 32 positioned on each of a windward side 42 and a leeward side 44 of the root portion 28. In some preferred examples the plurality of displacement sensors 32 may be distributed evenly, i.e. spaced evenly, around the root portion 28.

In the example shown in Figure 4, the sensors 32 of the displacement sensor array are attached to an inner surface 46 of the blade part 20. This may help to protect the sensors 32 from adverse weather conditions. Conversely, in some other examples (not shown) the turbine 10 may include displacement sensors 32 attached to an outer surface 48 of the blade part 20. In some examples it may be easier to detect and measure movement of the blade part 20 relative to the hub assembly 12 at the outer surface 48 of the blade part 20.

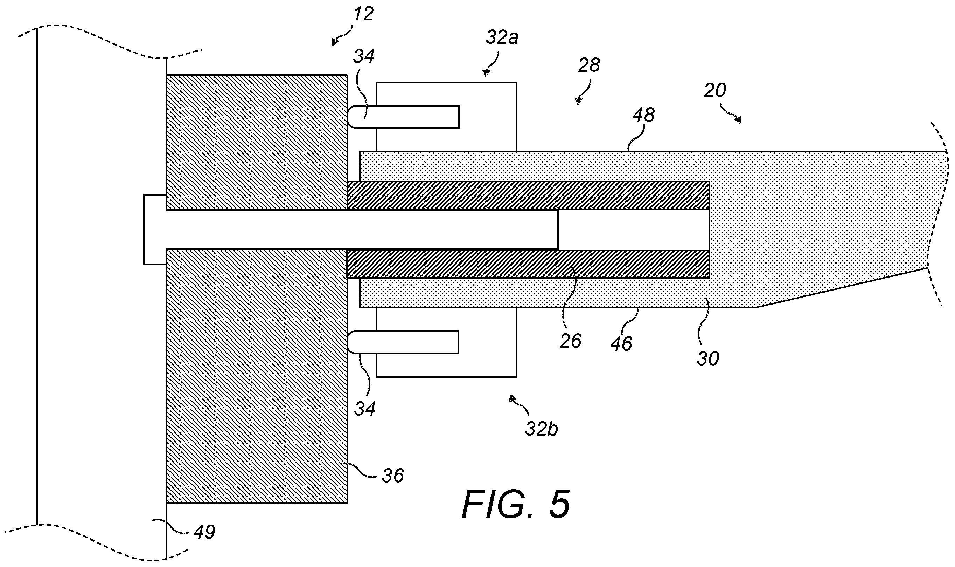

Referring now to the cross-sectional view in Figure 5, in some examples the displacement sensor array may include a plurality of outer displacement sensors 32a attached to an outer surface 48 of the blade part 20 and a plurality of inner displacement sensors 32b attached to an inner surface 46 of the blade part 20. In such an example, each outer displacement sensor 32a may be aligned with a corresponding inner displacement sensor 32b. Such an arrangement may enable measurement and monitoring of the independent movement of the inner and outer surfaces 46, 48 of the blade part 20 in response to an applied load. This may also be useful for assessing the integrity of fastenings, such as the inserts 26, and associated portions of the composite shell 30.

It should be appreciated that whilst the examples shown in the accompanying figures comprise displacement sensors 32 attached to the blade part 20, in some examples the displacement sensors 32 may be attached to the hub assembly 12. For example, the displacement sensors 32 may be attached to the pitch bearing 36, or to a hub main body 49 or stiffening plate (not shown) of the hub assembly 12, in some examples. Where the displacement sensors 32 are attached to the hub assembly 12, the physical contact probe 34 of each displacement sensor 32 physically contacts the blade part 20 or a reference component (not shown) attached to the blade part 20.

Whilst not shown in the accompanying drawings, in some examples the plurality of displacement sensors 32 may be connected together in series. The connected displacement sensors 32 may form a daisy chained sensor array. A wind turbine 10 in a wind farm monitoring and control system 50 may be a suitable application for such a daisy chained sensor array.

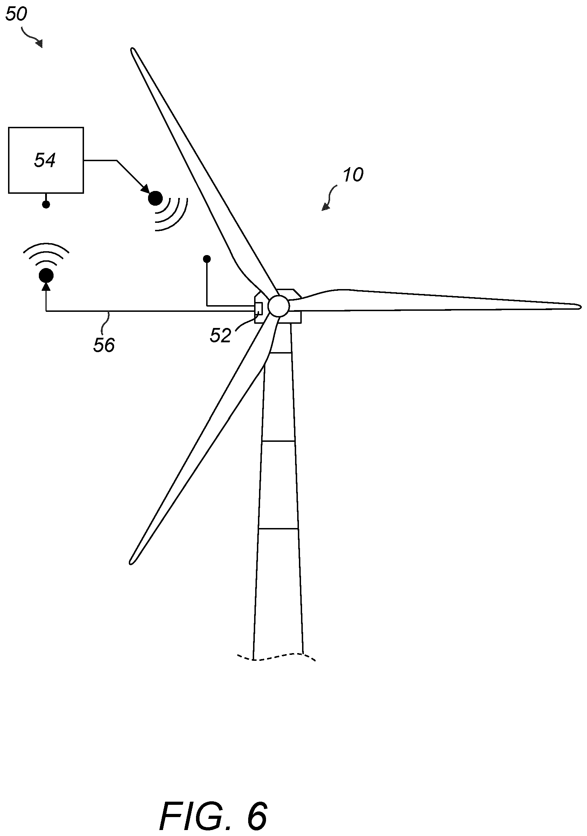

Figure 6 shows a schematic diagram of a wind farm monitoring and control system 50 which includes a wind turbine 10 as described in any of the examples herein. The turbine 10 may additionally include a wind turbine controller 52, and the wind farm monitoring and control system 50 may include a system controller 54. The system controller 54 may be communicably coupled to the displacement sensor array of the wind turbine 10 to receive output signals 56 from the plurality of displacement sensors 32. For example, the system controller 54 may be communicably coupled to the displacement sensor array to receive output signals 56 via the wind turbine controller 52, in some examples. As indicated in Figure 6, the system controller 54 may receive output signals 56 from the plurality of displacement sensors 32 via wireless communication. The output signals 56 may be indicative of detected relative movement between the blade part 20 and the hub assembly 12.

The system controller 54 may be communicably coupled to the wind turbine controller 52. For example, the system controller 54 may be configured to instruct the wind turbine controller 52 to perform a turbine operation dependent on the output signals 56 received from the displacement sensors 32. In some examples the system controller 54 may therefore be configured to instruct the wind turbine controller 52 to perform a turbine operation when the output signals 56 received from the displacement sensors 32 indicate a variation in relative displacement between the blade part 20 and hub assembly 12 which exceeds a predetermined relative displacement threshold.

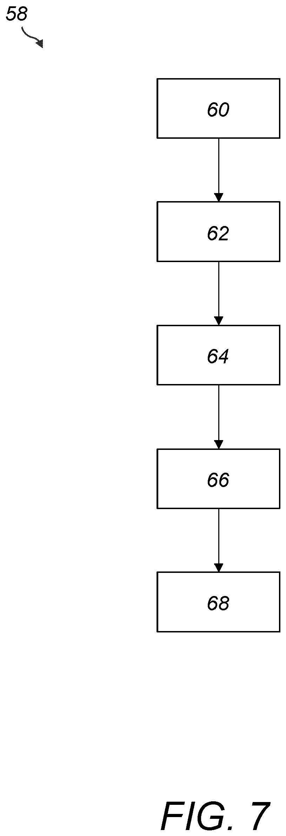

Figure 7 shows an example of a process 58 in which the system controller 54 instructs the wind turbine controller 52 based on output signals 56 received from the plurality of displacement sensors 32. For example, in step 60 the wind turbine 10 may be running in a normal operating mode. In step 62 one or more of the displacement sensors 32 may measure or detect movement of the blade part 20 relative to the hub assembly 16. In step 64 the system controller 54 may receive an output signal 56 from the one or more displacement sensors 32. It should be appreciated that steps 62 and 64 may be repeated throughout operation of the turbine 10 as part of a monitoring operation. In step 66, the system controller 54 may determine whether the output signals 56 received from the displacement sensors 32 indicate a variation in relative displacement which exceeds a predetermined relative displacement threshold. If such a threshold is exceeded, in step 68 the system controller 54 may proceed to instruct the wind turbine controller 52 to perform a turbine operation. For example, the turbine operation may comprise halting operation of the turbine 10.

The description provided herein serves to demonstrate a plurality of possible examples of the present invention. Features described in relation to any of the examples above may be readily combined with any other features described with reference to different examples without departing from the scope of the invention as defined in the appended claims.

## Claims

1. A wind turbine comprising a hub assembly, a blade part attached to the hub assembly, and a displacement sensor array comprising a plurality of displacement sensors;
wherein each displacement sensor comprises a physical contact probe which is slidable along a probe axis in a probe direction;
wherein each displacement sensor is attached to one of the blade part or the hub assembly; and
wherein the physical contact probe of each displacement sensor physically contacts the other of the blade part or the hub assembly such that the displacement sensor is arranged to detect relative movement between the blade part and the hub assembly in the probe direction.

2. The wind turbine of claim 1, wherein the blade part extends longitudinally in a spanwise direction, and wherein the respective probe direction of each displacement sensor is substantially parallel to the spanwise direction of the blade part.

3. The wind turbine of any preceding claim, wherein the plurality of displacement sensors comprises a plurality of microswitch sensors.

4. The wind turbine of claim 1 or claim 2, wherein the plurality of displacement sensors comprises a plurality of linear variable differential transformer (LVDT) sensors.

5. The wind turbine of any preceding claim, wherein the blade part comprises a composite shell and a plurality of inserts embedded in the composite shell, wherein the inserts are configured for attaching the blade part to the hub assembly.

6. The wind turbine of claim 5, wherein the blade part defines a root portion of a wind turbine blade, and wherein the inserts are distributed circumferentially around the root portion.

7. The wind turbine of claim 6, wherein the plurality of displacement sensors are attached to the blade part and distributed circumferentially around the root portion.

8. The wind turbine of claim 5 or claim 6, wherein each displacement sensor is attached to the blade part and aligned with an insert embedded in the composite shell of the blade part.

9. The wind turbine of any preceding claim, wherein each displacement sensor is attached to the blade part and wherein the physical contact probe of each displacement sensor physically contacts the hub assembly.

10. The wind turbine of claim 9, wherein the blade part is attached to a pitch bearing of the hub assembly, and wherein the physical contact probe of each displacement sensor physically contacts the pitch bearing.

11. The wind turbine of claim 9, wherein the blade part is attached to a stiffening plate of the hub assembly, and wherein the physical contact probe of each displacement sensor physically contacts the stiffening plate.

12. The wind turbine of any of claims 9 to 11, wherein the blade part defines a root portion of a wind turbine blade, and wherein the displacement sensor array comprises at least one displacement sensor positioned at each of a leading edge and an opposing trailing edge of the root portion, and at least one displacement sensor positioned on each of a windward side and a leeward side of the root portion.

13. The wind turbine of any of claims 9 to 12, wherein the displacement sensor array comprises a plurality of outer displacement sensors attached to an outer surface of the blade part and a plurality of inner displacement sensors attached to an inner surface of the blade part.

14. The wind turbine of claim 13, wherein each inner displacement sensor is aligned with a corresponding outer displacement sensor.

15. The wind turbine of any of claims 1 to 12, wherein the plurality of displacement sensors are connected together in series to form a daisy chained sensor array.

16. A wind farm monitoring and control system comprising a system controller and the wind turbine of any preceding claim, the wind turbine further comprising a wind turbine controller,
wherein the system controller is communicably coupled to the displacement sensor array to receive output signals from the plurality of displacement sensors indicative of detected relative movement between the blade part and the hub assembly, and
wherein the system controller is communicably coupled to the wind turbine controller and configured to instruct the wind turbine controller to perform a turbine operation dependent on the output signals received from the displacement sensors.

17. The wind farm monitoring and control system of claim 16, wherein the system controller is configured to instruct the wind turbine controller to perform a turbine operation when the output signals received from the displacement sensors indicate a variation in relative displacement between the blade part and hub assembly which exceeds a predetermined relative displacement threshold.

18. The wind farm monitoring and control system of claim 17, wherein the turbine operation comprises halting operation of the turbine.
